# EUROPÄISCHE PATENTANMELDUNG

(11) **EP 4 030 149 A1**
(43) Veröffentlichungstag der Anmeldung: **20.07.2022**
(21) Anmeldenummer: 21020010.1
(22) Anmeldetag: 13.01.2021
(51) Int. Cl.: G01F 1/84, G01F 15/00

(54) **SYSTEM UND VERFAHREN ZUM ERMITTELN EINES MASSENSTROMS**

(71) Anmelder: Linde GmbH, 82049 Pullach (DE)
(72) Erfinder: Dorner, Sascha, A-2440 Gramatneusiedl (AT); Fahrner, Daniel, 2880 Kirchberg (AT); Vidic, Karl Jojo, A-1070 Wien (AT)
(74) Vertreter: Fischer, Werner

(57) **Zusammenfassung**

Die Erfindung betrifft ein System (100) zum Ermitteln eines Massenstroms eines Mediums (M), mit einem Coriolis-Massendurchflussmesser (110), der dazu eingerichtet ist, ein Signal in Abhängigkeit von einem aktuellen Massenstrom des Mediums (M) auszugeben, mit einer Zuführleitung (120), die zum Zuführen des Mediums (M) zum Coriolis-Massendurchflussmesser (110) eingerichtet ist, mit einer Temperaturstabilisierungseinrichtung (130), die dazu eingerichtet ist, eine Temperatur zumindest eines Teils der Zuführleitung (120) zu stabilisieren, und mit einer Steuer- und/oder Auswerteeinheit (140), die dazu eingerichtet ist, das Signal des Coriolis-Massendurchflussmessers (110) zu erfassen und einen Massenstrom des Mediums (M) zu bestimmen, und die dazu eingerichtet ist, die Temperaturstabilisierungseinrichtung (130) anzusteuern, sowie ein entsprechendes Verfahren und eine Verwendung des Systems (100).

## Beschreibung

Die Erfindung betrifft ein System und ein Verfahren zum Ermitteln eines Massenstroms eines Mediums wie Wasserstoff sowie eine Verwendung eines solchen Systems.

### Hintergrund

An Wasserstofftankstellen kann Wasserstoff für z.B. mittels Wasserstoff angetriebene Fahrzeuge erhalten werden. Der Wasserstoff kann dort z.B. mittels einer Betankungsanlage bereitgestellt werden. Wie auch bei anderen Tankstellen für z.B. Erdgas, Benzin oder Diesel sollte dabei die abgegebene Menge an Wasserstoff möglichst genau ermittelt werden, insbesondere auch, um die Kosten bzw. den Preis für den abgegebenen Wasserstoff ermitteln zu können.

Messsysteme für die Ermittlung abgegebener Mengen an Wasserstoff können dabei den Massenstrom des Wasserstoffs (durch eine Abgabeleitung) erfassen, um so über die Zeitdauer die Menge zu ermitteln. Solche Messsysteme müssen - insbesondere bei Verwendung an Tankstellen - in der Regel geeicht werden. Dies bedeutet, dass die mittels des Messsystems ermittelte Menge an abgegebenem Wasserstoff um höchstens einen vorgegebenen Wert (meist relativ angegeben) von der tatsächlich abgegebenen Menge abweichen darf.

Vor diesem Hintergrund stellt sich die Aufgabe, eine Möglichkeit bereitzustellen, einen Massenstrom für ein Medium wie Wasserstoff möglichst genau zu ermitteln.

### Offenbarung der Erfindung

Diese Aufgabe wird durch ein System und ein Verfahren zum Ermitteln eines Massenstroms eines Mediums sowie eine Verwendung des Systems mit den Merkmalen der unabhängigen Patentansprüche gelöst. Bevorzugte Ausgestaltungen sind Gegenstand der abhängigen Patentansprüche sowie der nachfolgenden Beschreibung.

Die Erfindung beschäftigt sich mit einem System zum Ermitteln eines Massenstroms eines Mediums, insbesondere von Wasserstoff. Grundsätzlich funktioniert ein solches System oder Messsystem aber auch mit anderen Medien, seien es flüssige oder gasförmige Medien. Das System weist hierbei einen Coriolis-Massendurchflussmesser auf, der dazu eingerichtet ist, ein Signal in Abhängigkeit von einem aktuellen Massenstrom des Mediums auszugeben, also eines Massenstroms des Mediums, das durch den Coriolis-Massendurchflussmesser hindurchgeführt wird. Zudem weist das System hierzu eine Zuführleitung, die zum Zuführen des Mediums zum Coriolis-Massendurchflussmesser eingerichtet ist, auf, zweckmäßigerweise auch eine Abführleitung, die zum Abführen des Mediums aus dem Coriolis-Massendurchflussmesser eingerichtet ist.

Medium, das z.B. aus einem Tank an ein Fahrzeug abgegeben werden soll, wird hierzu dann durch die Zuführleitung in den Coriolis-Massendurchflussmesser eingebracht und danach über die Abführleitung hin zum Fahrzeug bzw. einer Zapfstelle. Die Zuführ- und Abführleitung, soweit sie Teil des Systems bzw. Messsystems sind, können z.B. entsprechende Schnittstellen bzw. Flansche aufweisen, mittels welcher das System entsprechend in eine Betankungsanlage eingebunden werden kann. Anzumerken ist, dass es auch denkbar ist, dass nur ein bestimmter - aber fest vergebener - Anteil des Mediums durch das System bzw. den Coriolis-Massendurchflussmesser geführt wird, sodass der gesamte Massenstrom dann entsprechend dem Anteil berechnet werden kann.

Ein Coriolis-Massendurchflussmesser nutzt den Coriolis-Effekt bzw. die Coriolis-Kraft aus, um den Massenstrom zu bestimmen. Hierzu wird das Medium z.B. durch ein Rohr geleitet, das z.B. mittels geeigneter Aktoren zum Schwingen mit einer festen Frequenz (typischerweise eine Sinusschwingung) angeregt wird. Wenn das Medium durch dieses Rohr fließt, bewirkt das Massenströmungsmoment eine Änderung der Rohrschwingung. Das Rohr dreht sich, was zu einer Phasenverschiebung führt. Diese Phasenverschiebung kann gemessen und eine lineare Ausgabe - z.B. als ein Signal - proportional zur Strömung abgeleitet werden. Es kann damit direkt von der Phasenverschiebung der Schwingung auf den Massendurchfluss bzw. den Massenstrom geschlossen werden. Es versteht sich, dass dabei die Geometrie des Rohres, insbesondere dessen Querschnitt, berücksichtigt werden muss.

Die Messung des Massenstroms hängt dabei aber auch stark von der Dichte - und damit auch von der Temperatur und vom Druck - des Mediums ab. Um möglichst genaue Messwerte bzw. möglichst geringe Abweichungen der Messwerte von den tatsächlichen Werten zu erhalten, sollte also die Dichte möglichst konstant gehalten werden. Dies kann durch Einhaltung möglichst konstanter Umgebungsbedingungen, insbesondere der Temperatur erreicht werden, wie sich gezeigt hat. In der Praxis werden solche Betankungsanlagen an Tankstellen aber z.B. Sonneneinstrahlung sowie Temperaturschwankungen zwischen Tag und Nacht sowie über verschiedene Jahreszeiten hinweg ausgesetzt sein. Dies macht die Einhaltung konstanter Umgebungsbedingungen schwierig. Die Messwerte sind damit einer großen Schwankungsbreite unterworfen.

Im Rahmen der Erfindung wird nun vorgeschlagen, dass für das System eine Temperaturstabilisierungseinrichtung vorgesehen wird bzw. dass das System eine solche aufweist, die dazu eingerichtet ist, eine Temperatur zumindest eines Teils der Zuführleitung - die, wie schon erwähnt zum Zuführen des Mediums zum Coriolis-Massendurchflussmesser dient - zu stabilisieren. Unter "Stabilisieren" der Temperatur der Zuleitung bzw. zumindest eines Teils davon ist dabei insbesondere zu verstehen, dass die Temperatur auf einem möglichst konstanten Wert oder zumindest innerhalb eines - zweckmäßigerweise möglichst kleinen - Temperaturbereichs gehalten wird. Wenn die Temperatur der Zuführleitung auf einem (möglichst) konstanten Wert gehalten wird, kann entsprechend auch die Temperatur des durch die Zuführleitung hindurch und in den Coriolis-Massendurchflussmesser fließenden Mediums (möglichst) konstant gehalten werden, da sich die Temperatur des Mediums an die Temperatur der Zuführleitung angleicht. Auf diese Weise kann die Dichte des Mediums ebenfalls (möglichst) konstant gehalten werden, sodass die Messwerte des Coriolis-Massendurchflussmessers möglichst genau am realen Wert bzw. Messwert (dieser kann z.B. als Bezugsgröße dienen) sind bzw. kaum Schwankungen unterworfen sind.

Weiterhin weist das System eine Steuer- und/oder Auswerteeinheit, z.B. eine geeigneten Recheneinheit oder Rechner, auf, die dazu eingerichtet ist, das Signal des Coriolis-Massendurchflussmessers zu erfassen und (daraus) einen Massenstrom des Mediums zu bestimmen bzw. zu berechnen. Die Steuer- und/oder Auswerteeinheit ist dann zudem dazu eingerichtet, die Temperaturstabilisierungseinrichtung anzusteuern, damit die Zuführleitung auf einem (möglichst) konstanten Temperaturwert gehalten wird.

Eine besonders bevorzugte Möglichkeit für die Temperaturstabilisierungseinrichtung ist, dass diese eine Vielzahl von thermo-elektrischen Elementente wie Peltier-Elementen umfasst, die zumindest an einem Teil der Zuführleitung angeordnet sind, und zwar insbesondere gleichmäßig um einen Umfang der Zuführleitung verteilt. Zweckmäßigerweise sind die thermo-elektrischen bzw. Peltier-Elemente dabei mittels einer Wärmeleitpaste an der Zuführleitung angebracht

Bei einem Peltier-Element handelt es sich um einen elektrothermischen Wandler, der basierend auf dem Peltier-Effekt bei Stromdurchfluss eine Temperaturdifferenz erzeugt. Peltier-Elemente können sowohl zur Kühlung als auch - bei Stromrichtungsumkehr - zum Heizen verwendet werden. Grundlage für den Peltier-Effekt ist in der Regel der Kontakt von zwei Halbleitern, die ein unterschiedliches Energieniveau (entweder p- oder n-leitend) der Leitungsbänder besitzen. Wird ein Strom durch zwei hintereinanderliegende Kontaktstellen dieser Materialien geleitet, so muss an der einen Kontaktstelle Wärmeenergie aufgenommen werden, damit das Elektron in das energetisch höhere Leitungsband des benachbarten Halbleitermaterials gelangt. Folglich kommt es zur Abkühlung, da der Umgebung Energie in Form von Wärme entzogen wird. An der anderen Kontaktstelle fällt das Elektron von einem höheren auf ein tieferes Energieniveau, so dass hier Energie in Form von Wärme abgegeben wird.

Diese thermo-elektrischen bzw. Peltier-Elemente können dann über die Steuer- und/oder Auswerteeinheit entsprechend angesteuert bzw. mit Strom versorgt werden. Auf diese Weise ist eine möglichst genaue und gleichmäßige - und vor alle auch genau steuerbare - Temperaturstabilisierung möglich.

Eine andere bevorzugte Möglichkeit für die Temperaturstabilisierungseinrichtung ist, dass diese einen Wärmetauscher umfasst bzw. Teil eines solchen ist, bei dem zumindest ein Teil der Zuführleitung Teil des Wärmetauschers ist. Ein Wärmetauscher weist typischerweise eine weitere Leitung auf, durch die ein anderes Medium fließt, sowie ein Übertragungsmedium wie z.B. Wasser oder Kohlenstoffdioxid, das einen Wärmeübertrag bzw. Austausch zwischen den beiden Leitungen - eine davon ist hier die Zuführleitung - bewirkt (vom wärmeren zum kälteren). Denkbar ist in diesem Zusammenhang z.B. ein Wärmetauscher, bei dem das mediumführende Rohr (bzw. Leitung) in einer Kältespeichermasse eingegossen ist, als Rückkühlung kann dann ein Plattenwärmetauscher verwendet werden. Als Wärmetauscher kommt z.B. aber auch ein Rohr-in-Rohr-Wärmetauscher in Betracht, bei dem die Zuführleitung in inneres Rohr bildet, das von einem äußeren Rohr umgeben ist, in dem dann ein weiteres Medium fließt. Auf diese Weise kann ebenso die Temperatur der Zuführleitung und damit die Temperatur des darin strömenden Mediums angepasst und auf einem (möglichst) konstanten Wert gehalten werden. Hierzu kann z.B. die Temperatur des anderen Mediums in der anderen Leitung des Wärmetauschers entsprechend angepasst oder-je nach Wärmetauscher - auf einem konstanten Wert gehalten werden. Denkbar ist grundsätzlich auch, dass beide Arten der Temperaturstabilisierungseinrichtung kombiniert werden, z.B. an verschiedenen Stellen der Zuführleitung. Die energetisch bessere oder vorteilhaftere Variante, folglich die wirtschaftlichere Variante ist hier zu bevorzugen. Dies kann ggf. auch von der geografischen Lage abhängen; die Kosten für den Strom sind z.B. weltweit einer großen Schwankungsbreite unterworfen.

Vorteilhafterweise weist das System weiterhin wenigstens einen Drucksensor, insbesondere wenigstens zwei redundante Drucksensoren auf, der bzw. die an die Zuführleitung angeschlossen und zum Ermitteln eines Drucks des Mediums eingerichtet ist bzw. sind. Diese Drucksensoren dienen z.B. der Drucküberwachung in einem Tank (aus dem das Medium durch den Durchflussmesser geführt wird) und sie sind zweckmäßigerweise an die Steuer- und/oder Auswerteeinheit angeschlossen, damit der Druck dorthin übermittelt werden kann, falls benötigt.

Vorzugsweise weist das System außerdem einen Temperatursensor auf, der an die schon erwähnte Abführleitung angeschlossen und zum Ermitteln einer Temperatur des Mediums eingerichtet ist. Dieser Temperatursensor ist zweckmäßigerweise an die Steuer- und/oder Auswerteeinheit angeschlossen, damit die Temperatur dorthin übermittelt werden kann. Ebenso kann damit die mittels der Temperaturstabilisierungseinrichtung eingestellt Temperatur überprüft werden, falls nötig. Denkbar ist auch, daraufhin - oder auch im Rahmen einer Regelung - die Temperaturstabilisierungseinrichtung hinsichtlich der einzustellenden Temperatur anzusteuern.

Grundsätzlich können die von dem Temperatursensor erfasste Temperatur wie auch der von den zuvor genannten Drucksensoren erfasste Druck als Regelgröße für die Betankung dienen. Laut Betankungsnorm müssen z.B. Druck und Temperatur während der Betankung innerhalb eines gewissen Fensters bleiben. Die Werte werden also für die Ermittlung des Massenstromes nicht direkt benötigt, sehr wohl ist es aber wichtig, dass die Temperatur konstant bleibt, wie auch nachfolgend noch näher beschrieben wird. Eine Temperaturüberwachung bzw. die Messung der Temperaturschwankung ist wesentlich für die genaue Massenstrommessung.

Das System weist bevorzugt ein Gehäuse auf, das den Coriolis-Massendurchflussmesser und zumindest den Teil der Zuführleitung, dessen Temperatur mittels der Temperaturstabilisierungseinrichtung stabilisiert wird, und insbesondere auch die Temperaturstabilisierungseinrichtung selbst (wenn diese z.B. die Peltier-Elemente umfasst, umgibt. Ebenso können die schon erwähnten Druck- und Temperatursensoren innerhalb des Gehäuses angeordnet sein. Ein solches Gehäuse bewirkt eine weitere Stabilisierung der Umgebungsbedingungen am Ort des Coriolis-Massendurchflussmesser sowie der Zuführleitung. Zudem schützt das Gehäuse vor sonstigen Umwelteinwirkungen. Die Steuer- und/oder Auswerteeinheit ist dann bevorzugt außerhalb des Gehäuses angeordnet, Signal- bzw. Ansteuerleitungen zu den einzelnen Komponenten können dann durch geeignete Durchführungen, z.B. sog. Schottverschraubungen, von außen in das Gehäuse bzw. umgekehrt geführt werden. Ebenso können im Gehäuse entsprechenden Schnittstellen oder Flansche für den Anschluss von Zuführ- und Abführleitungen vorgesehen sein.

Eine Möglichkeit ist aber auch, die Steuer- und/oder Auswerteeinheit innerhalb des Gehäuses anzuordnen, z.B. um diese eine geringeren Umwelteinwirkung auszusetzen. In diesem Fall sind dann ggf. weniger Durchführungen nötig.

Es ist auch von Vorteil, wenn das System weiterhin eine weitere Temperaturstabilisierungseinrichtung, die insbesondere eine weitere Vielzahl von thermo-elektrischen Elementen, bevorzugt Peltier-Elementen, umfasst, aufweist die dazu eingerichtet ist, eine Temperatur zumindest eines Teils des Gehäuses zu stabilisieren. Dies erlaubt eine noch zuverlässigere Stabilisierung der Temperatur des Mediums, was insbesondere für Orte mit besonders hohen Temperaturschwankungen z.B. zwischen Tag und Nacht relevant sein kann. Zudem kann dann ein weiterer Temperatursensor vorgesehen sein, der außen an dem Gehäuse angeordnet ist. Damit können dann Temperaturgradienten am Gehäuse ermittelt werden, sodass z.B. mittels einer Software direkt auf größere Temperaturschwankungen reagiert werden kann. Beispielsweise kann dann eine der Temperaturstabilisierungseinrichtungen entsprechend angesteuert werden.

Eine besonders bevorzugte Verwendung des vorgeschlagenen Systems ist zum Ermitteln eines Massenstroms von Wasserstoff als Medium, und zwar insbesondere wenn das System bei einer Wasserstoff-Betankungsanlage zum Ermitteln einer im Rahmen eines Tankvorgangs abgeführten Menge an Wasserstoff und folglich insbesondere zur Ermittlung von Kosten bzw. Gesamtkosten verwendet wird.

Die Erfindung betrifft außerdem ein Verfahren zum Ermitteln eines Massenstroms eines Mediums wie Wasserstoff unter Verwendung eines Coriolis-Massendurchflussmessers, dem das Medium über eine Zuführleitung zugeführt wird. Dabei wird eine Temperatur zumindest eines Teils der Zuführleitung mittels einer Temperaturstabilisierungseinrichtung, die z.B. Peltier-Elemente umfasst, stabilisiert. Bei dem Verfahren wird bevorzugt ein erfindungsgemäßes System verwendet. Für weitere Ausgestaltungen und Vorteile des Verfahrens sei auf die vorstehenden Erläuterungen zum System verwiesen, die hier entsprechend gelten.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

- Figur 1: zeigt schematisch ein erfindungsgemäßes System zum Ermitteln eines Massenstroms eines Mediums in einer bevorzugten Ausführungsform.
- Figur 2: zeigt schematisch ein erfindungsgemäßes System zum Ermitteln eines Massenstroms eines Mediums in einer weiteren bevorzugten Ausführungsform.
- Figur 3: zeigt schematisch ein erfindungsgemäßes Verfahren zum Ermitteln eines Massenstroms eines Mediums in einer bevorzugten Ausführungsform.
- Figur 4: zeigt schematisch eine erfindungsgemäße Verwendung eines Systems zum Ermitteln eines Massenstroms eines Mediums in einer bevorzugten Ausführungsform.

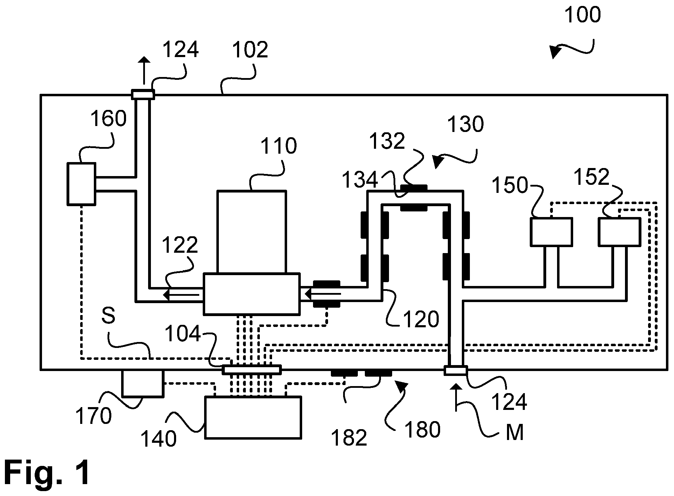

In Figur 1 ist schematisch ein erfindungsgemäßes System 100 - es handelt sich insbesondere um ein Messsystem - zum Ermitteln eines Massenstroms eines Mediums M - hierbei handelt es sich insbesondere um Wasserstoff - in einer bevorzugten Ausführungsform dargestellt. Das System 100 weist ein Gehäuse 102 auf, in dem die darin angeordneten Komponenten vor Umwelteinflüssen geschützt sind. Eine Steuer- und/oder Auswerteeinheit 140 ist außerhalb des Gehäuses 102 angeordnet.

In dem Gehäuse 102 sind ein Coriolis-Massendurchflussmesser 110 sowie eine Zuführleitung 120 und eine Abführleitung 122 angeordnet, über die das Medium in den Coriolis-Massendurchflussmesser 110 und von dort dann wieder abgeführt werden kann. Bei Zuführ- und Abführleitung kann es sich um Hochdruckleitungen bzw. Hochdruckrohre handeln, insbesondere dann, wenn z.B. Wasserstoff als Medium unter hohem Druck darin fließen soll. Eine Flussrichtung des Mediums M ist mittels Pfeilen angedeutet. Am Gehäuse 102 sind beispielhaft zwei Schnittstellen bzw. Anschlüsse 124 gezeigt, mittels welcher eine Anbindung weiterer Leitungen für das Medium an Zuführleitung 120 und Abführleitung 122 möglich ist.

Der Coriolis-Massendurchflussmesser 110 ist beispielhaft mittels dreier Signal- und/oder Versorgungsleitungen S (beispielhaft ist nur eine von mehreren, jeweils gestrichelt dargestellten Signal- und/oder Versorgungsleitungen bezeichnet) mit der Steuer- und/oder Auswerteeinheit 140 verbunden. Die Signal- und/oder Versorgungsleitungen S sind hierzu durch eine Schnittstelle 104 - es kann sich z.B. um sog. Schottverschraubungen handeln - in das Gehäuse 102 hineingeführt.

Weiterhin sind in dem Gehäuse 102 zwei Drucksensoren 150, 152 (oder auch als Drucktransmitter bezeichnet) angeordnet, die über z.B. ein T-Stück an die Zuführleitung 120 angeschlossen sind. Die Drucksensoren können redundant verwenden werden und sind über Signal- und/oder Versorgungsleitungen S mit der Steuer- und/oder Auswerteeinheit 140 verbunden. Von den Drucksensoren 150, 152 bereitgestellte Werte zum Druck des Mediums M können dann bei Bedarf in der Steuer- und/oder Auswerteeinheit 140 verwendet werden, wie vorstehend beschrieben.

Weiterhin ist in dem Gehäuse ein Temperatursensor 160 angeordnet, der über z.B. ein T-Stück an die Abführleitung 122 angeschlossen ist. Der Temperatursensor 160 ist über eine Signal- und/oder Versorgungsleitung S mit der Steuer- und/oder Auswerteeinheit 140 verbunden. Von Temperatursensor 160 bereitgestellte Werte der Temperatur des Mediums M können dann bei Bedarf in der Steuer- und/oder Auswerteeinheit 140 verwendet werden.

Weiterhin ist in dem Gehäuse 102 eine Temperaturstabilisierungseinrichtung 130 angeordnet bzw. vorgesehen, die in dem gezeigten Fall eine Vielzahl von Peltier-Elementen 132 (es ist beispielhaft nur eines bezeichnet) umfasst. Diese Peltier-Elemente 132 sind vorzugsweise gleichmäßig über den Umfang der Zuführleitung 120 und entlang deren Erstreckung vom T-Stück, an das die Drucksensoren angeschlossen, bis zum Coriolis-Massendurchflussmesser 110 vorgesehen und z.B. mittels Wärmeleitpaste 134 oder ähnlichem an der Außenseite der Zuführleitung 120 befestigt bzw. angebracht.

Die Temperaturstabilisierungseinrichtung 130 bzw. die Peltier-Elemente 132 sind nun dazu eingerichtet, eine Temperatur des Teils der Zuführleitung 120, an dem die Peltier-Elemente 132 angeordnet sind, zu stabilisieren. Hierzu sind die Peltier-Elemente 132 z.B. mittels Signal- und/oder Versorgungsleitungen S mit der Steuer- und/oder Auswerteeinheit 140 verbunden, sodass diese entsprechend angesteuert werden können (beispielhaft ist nur die Anbindung eines Peltier-Elements eingezeichnet). Auf diese Weise kann die Temperatur der Zuführleitung 120 und damit auch die Temperatur des Mediums, das darin fließt, stabilisiert werden, was zu einer besseren bzw. genaueren Messung des Massenstroms des Mediums M durch den Coriolis-Massendurchflussmesser 110 führt.

Weiterhin ist ein Temperatursensor 170 außen am Gehäuse 102 angeordnet, der ebenfalls mittels einer Signal- und/oder Versorgungsleitung S mit der Steuer- und/oder Auswerteeinheit 140 verbunden ist. Ebenso ist eine weitere Temperaturstabilisierungseinrichtung 180, die Peltier-Elemente 182 aufweist, außen am Gehäuse 102 angeordnet bzw. angebracht; die Peltier-Elemente 182 sind z.B. ebenfalls mittels Wärmeleitpaste oder ähnlichem an der Außenseite des Gehäuses 102 befestigt bzw. angebracht und z.B. mittels Signal- und/oder Versorgungsleitungen S mit der Steuer- und/oder Auswerteeinheit 140 verbunden, sodass diese entsprechend angesteuert werden können (beispielhaft ist auch hier nur die Anbindung eines Peltier-Elements eingezeichnet). Auf diese Weise kann ebenso die Temperatur des Gehäuses 102 stabilisiert werden, was zu einer noch besseren Stabilisierung der Temperatur des Mediums führt.

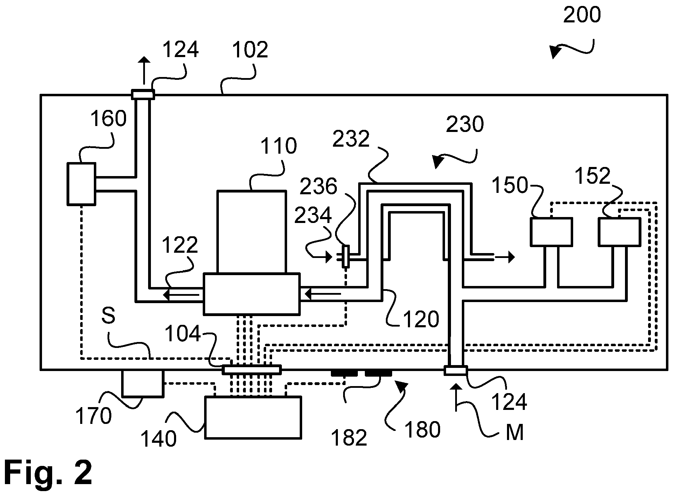

In Figur 2 ist schematisch ein erfindungsgemäßes System 200 zum Ermitteln eines Massenstroms eines Mediums in einer weiteren bevorzugten Ausführungsform dargestellt. Das System 200 entspricht im Grunde dem System 100 aus Figur 1, nur mit dem Unterschied, dass anstelle der Temperaturstabilisierungseinrichtung 130 mit den Peltier-Elementen eine Temperaturstabilisierungseinrichtung 230 vorgesehen ist, die einen Wärmetauscher aufweist bzw. Teil eines solchen ist. Hierzu ist ein Rohr 232 vorgesehen, das einen Teil der Zuführleitung 120 umgibt und in dem ein Medium 234 fließt, und zwar insbesondere entgegen der Flussrichtung des Mediums M. Zudem ist ein Regelventil 236 vorgesehen, das z.B. mittels einer Signal- und/oder Versorgungsleitung S mit der Steuer- und/oder Auswerteeinheit 140 verbunden ist, sodass das Regelventil 236 entsprechend angesteuert werden kann, um den Fluss des Mediums 234 zu regeln. Im Übrigen gelten die Ausführungen zu Figur 1, die entsprechenden Komponenten sind mit den gleichen Bezugszeichen versehen.

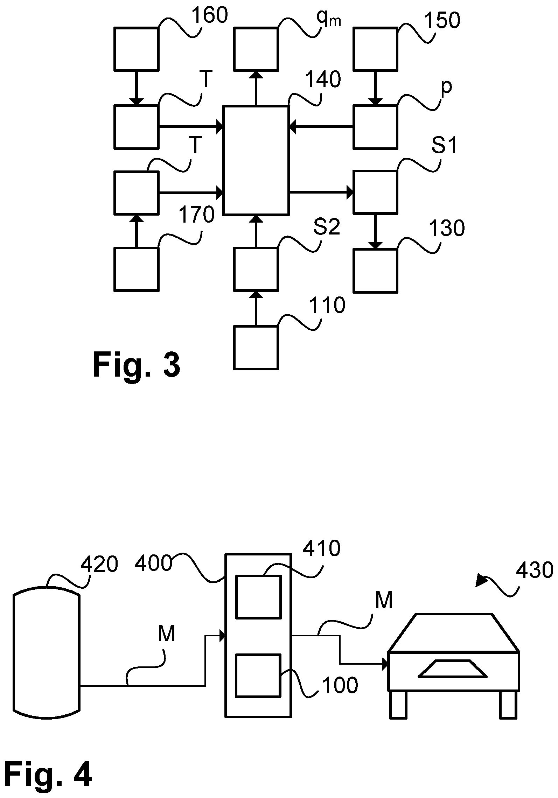

In Figur 3 ist schematisch ein erfindungsgemäßes Verfahren zum Ermitteln eines Massenstroms eines Mediums in einer bevorzugten Ausführungsform dargestellt. Hierzu kann z.B. das System 100, wie vorstehend erläutert, verwendet werden. Von der Steuer- und/oder Auswerteeinheit 140 - es kann sich dabei z.B. um einen geeigneten Rechner handeln - werden von den Temperatursensoren 160 und 170 jeweils eine Temperatur T erhalten (bzw. ein entsprechendes Signal), von dem Drucksensor 150 (ggf. auch vom Drucksensor 152, hier nicht gezeigt) wird ein Druck p erhalten (bzw. ein entsprechendes Signal). Zudem steuert die Steuer- und/oder Auswerteeinheit 140 z.B. mittels eines Ansteuersignals S1 die Temperaturstabilisierungseinrichtung 130 an (ggf. auch die Temperaturstabilisierungseinrichtung 180, hier nicht gezeigt), um so die Temperatur des Mediums möglichst konstant zu halten.

Vom Coriolis-Massendurchflussmesser 110 erhält die Steuer- und/oder Auswerteeinheit 140 ein Signal S2, das eine Information über den Massenstrom qₘ enthält, den die Steuer- und/oder Auswerteeinheit 140 bestimmen bzw. ermitteln kann.

In Figur 4 ist schematisch eine erfindungsgemäße Verwendung eines Systems 100 zum Ermitteln eines Massenstroms eines Mediums M in einer bevorzugten Ausführungsform dargestellt. Das System 100 (es könnte sich auch um das System 200 handeln) wird hier bei einer Betankungsanlage 400 verwendet, der Wasserstoff als Medium M aus einem Tank 410 zugeführt wird und über die der Wasserstoff an ein Fahrzeug 430 abgegeben wird. Das System 100 wird hierbei dazu verwendet, den Massenstroms des durchfließenden Wasserstoffs und damit letztlich die abgeführte Menge an Wasserstoff zu ermitteln. Diese kann dann z.B. auf einer Anzeige 410 ausgegeben werden, z.B. auch zusammen mit deren Kosten bzw. des dafür zu zahlenden Preises.

## Patentansprüche

1. System (100, 200) zum Ermitteln eines Massenstroms (qₘ) eines Mediums (M), mit einem Coriolis-Massendurchflussmesser (110), der dazu eingerichtet ist, ein Signal in Abhängigkeit von einem aktuellen Massenstrom (qₘ) des Mediums (M) auszugeben, mit einer Zuführleitung (120), die zum Zuführen des Mediums (M) zum Coriolis-Massendurchflussmesser (110) eingerichtet ist, mit einer Temperaturstabilisierungseinrichtung (130, 230), die dazu eingerichtet ist, eine Temperatur zumindest eines Teils der Zuführleitung (120) zu stabilisieren, und mit einer Steuer- und/oder Auswerteeinheit (140), die dazu eingerichtet ist, das Signal des Coriolis-Massendurchflussmessers (110) zu erfassen und einen Massenstrom (qₘ) des Mediums (M) zu bestimmen, und die dazu eingerichtet ist, die Temperaturstabilisierungseinrichtung (130, 230) anzusteuern.

2. System (100) nach Anspruch 1, wobei die Temperaturstabilisierungseinrichtung (130) eine Vielzahl von thermo-elektrischen Elementen, insbesondere Peltier-Elementen (132) umfasst, die zumindest an einem Teil der Zuführleitung (120) angeordnet sind, insbesondere gleichmäßig um einen Umfang der Zuführleitung (120) verteilt.

3. System (100) nach Anspruch 2, wobei die thermo-elektrischen Elemente (132) mittels einer Wärmeleitpaste (134) an der Zuführleitung (120) angebracht sind.

4. System (200) nach einem der vorstehenden Ansprüche, wobei die Temperaturstabilisierungseinrichtung (230) einen Wärmetauscher umfasst, bei dem zumindest ein Teil der Zuführleitung (120) Teil des Wärmetauschers ist.

5. System nach Anspruch 5, wobei der Wärmetauscher als Rohr-in-Rohr-Wärmetauscher oder als Wärmetauscher mit einem Übertragungsmedium, das einen Wärmeübertrag zwischen der Zuführleitung und einer anderen Leitung bewirkt, oder als Wärmetauscher, bei dem eine mediumführende Leitung in einer Kältespeichermasse eingegossen ist, ausgebildet ist.

6. System (100, 200) nach einem der vorstehenden Ansprüche, weiterhin mit wenigstens einem Drucksensor (150, 152), insbesondere wenigstens zwei redundanten Drucksensoren, der an die Zuführleitung (120) angeschlossen und zum Ermitteln eines Drucks des Mediums (M) eingerichtet ist.

7. System (100, 200) nach einem der vorstehenden Ansprüche, weiterhin mit einem Temperatursensor (160), der an eine Abführleitung (122), die zum Abführen des Mediums (M) aus dem Coriolis-Massendurchflussmesser (110) eingerichtet ist, angeschlossen und zum Ermitteln einer Temperatur des Mediums (M) eingerichtet ist.

8. System (100, 200) nach einem der vorstehenden Ansprüche, weiterhin mit einem Gehäuse (102), das den Coriolis-Massendurchflussmesser (110), und zumindest den Teil der Zuführleitung (120), dessen Temperatur mittels der Temperaturstabilisierungseinrichtung (130) stabilisiert wird, und insbesondere auch die Temperaturstabilisierungseinrichtung (130), umgibt.

9. System (100, 200) nach Anspruch 8, weiterhin mit einer weiteren Temperaturstabilisierungseinrichtung (180), die insbesondere eine weitere Vielzahl von thermo-elektrischen Elementen, bevorzugt Peltier-Elementen (182), umfasst, die dazu eingerichtet ist, eine Temperatur zumindest eines Teils des Gehäuses (102) zu stabilisieren.

10. System (100, 200) nach Anspruch 8 oder 9, weiterhin mit einem weiteren Temperatursensor (170), der außen an dem Gehäuse (102) angeordnet ist.

11. System (100, 200) nach einem der vorstehenden Ansprüche, wobei die Steuer- und/oder Auswerteeinheit (140) außerhalb des Gehäuses (102) angeordnet ist.

12. System (100, 200) nach einem der Ansprüche 1 bis 10, wobei die Steuer- und/oder Auswerteeinheit (140) innerhalb des Gehäuses (102) angeordnet ist

13. System (100, 200) nach einem der vorstehenden Ansprüche, das zum Ermitteln eines Massenstroms von Wasserstoff als Medium (M) eingerichtet ist.

14. Verwendung eines Systems (100, 200) nach einem der vorstehenden Ansprüche zum Ermitteln eines Massenstroms von Wasserstoff als Medium (M).

15. Verwendung nach Anspruch 14, bei der das System (100, 200) bei einer Wasserstoff- Betankungsanlage zum Ermitteln einer im Rahmen eines Tankvorgangs abgeführten Menge an Wasserstoff und/oder dessen Kosten verwendet wird.

16. Verfahren zum Ermitteln eines Massenstroms (qₘ) eines Mediums (M) unter Verwendung eines Coriolis-Massendurchflussmessers (110), dem das Medium über eine Zuführleitung (120) zugeführt wird, wobei eine Temperatur zumindest eines Teils der Zuführleitung (120) mittels einer Temperaturstabilisierungseinrichtung (130, 230) stabilisiert wird.

17. Verfahren nach Anspruch 16, bei dem ein System (100, 200) nach einem der Ansprüche 1 bis 13 verwendet wird.
